# EUROPEAN PATENT APPLICATION

(11) **EP 1 494 263 A2**
(43) Date of publication of application: **05.01.2005**
(21) Application number: 04253593.0
(22) Date of filing: 16.06.2004
(51) Int. Cl.: H01J 61/38, H01J 61/82, H01J 61/12, H01J 61/70, H01L 25/075, H01K 1/26

(54) **Light sources for improving visual perceptions under mesopic lighting conditions**

(30) Priority: 18.06.2003 GB 0314165
(71) Applicant: GENERAL ELECTRIC COMPANY, Schenectady, NY 12345 (US)
(72) Inventor: Laher, Ishmail, Oadby Leicestershire LE2 4NR (GB); Mucklejohn, Stuart Albert, Wigston Magna Leicesterhsire LE18 3YD (GB); Vulliamy, Michael Justin, Melton Mowbray Leicestershire LE14 2DD (GB); Guest, Edward Charles, Thrussington Leicestershire LE7 4UA (GB); Preston, Barry, Melton Mowbray Leicestershire LE14 2TE (GB)
(74) Representative: Pedder, James Cuthbert

(57) **Abstract**

A light source such as a ceramic metal halide lamp has a spectral distribution of emitted light which at a first operating power substantially corresponds with the sensitivity of the human eye under photopic conditions. When the lamp is operated at an operating power less than the first operating power, the spectral distribution of emitted light shifts to substantially correspond with the sensitivity of the human eye under mesopic or scotopic conditions.

## Description

This invention relates to light sources which provide a light output having a spectral distribution of emitted light which substantially corresponds with the spectral sensitivity of the human eye.

As is well known, the peak sensitivity of the human eye in daylight is around 555 nm.

Current light sources have a spectral distribution of emitted light which is optimised for photopic (daylight) lighting conditions, i.e. having a luminance >10 cd.m⁻². For example Low Pressure Sodium (LPS) lamps and High Pressure Sodium (HPS) lamps which are extensively used for roadway lighting, and to a lesser extent High Pressure Mercury Vapour (HPMV) lamps, have been designed to maximise the photopic efficacy of the output radiation. Known HPS lamps are described, for example, in US-A-3,248,590. A metal halide discharge lamp with a ceramic arctube is described in US-A-6,031,332, and the construction of such a lamp is disclosed in EP-A-0,587,238.

The sensitivity of the human eye response at low light levels shifts to shorter wavelength, reducing the effective efficacy and hence efficiency of these known lighting systems. The peak of the human eye sensitivity shifts in a continuous manner from 555 nm to 507 nm as light levels fall to extremely low levels.

It would be desirable to provide light sources with output optimised to match the changes in eye response, thereby enabling gains in effective efficacy, lighting system efficiency and hence major savings in energy consumption.

According to the present invention, there is provided a light source having a spectral distribution of emitted light which at a first operating power substantially corresponds with the sensitivity of the human eye under photopic conditions, characterised in that when operated at an operating power less than the first operating power, the spectral distribution of emitted light shifts to substantially correspond with the sensitivity of the human eye under mesopic or scotopic conditions.

The light sources of the invention have a spectral output tuned for optimum human visual perception under mesopic and scotopic lighting conditions. These light sources will give improved visual perception at luminance levels of 0.01 to 10 cd.m⁻² compared to light sources currently available. These new light sources will be particularly important for mentally demanding tasks carried out under low illumination conditions as exemplified by driving on urban and arterial roads. An important feature of the new light sources for roadway lighting is the ability of the light source energy consumption to be reduced as an energy saving measure for some part of its operational cycle.

Embodiments of light sources in accordance with the invention will now be described, by way of example, with reference to the accompanying drawings, in which:
Figure 1 and Figure 2 show spectral power distributions for known HPS and ceramic metal halide (i.e. metal halide discharge lamp with a ceramic arctube) lamps, respectively;
Figure 3 shows the spectral power distribution of a 150W ceramic metal halide lamp with the dose of this invention;
Figure 4 shows mesopic output at various luminance levels for a variety of lamps;
Figures 5 and 6 show relative mesopic output at various luminance levels for 150W lamps operated at 150W and 70W;
Figure 7 shows correlated colour temperature (CCT) as a function of Cal₂ additions to a 10mg dose of {Na,In,Tl,Br,I};
Figure 8 shows colour rendering index (CRI) as a function of Cal₂ additions to a 10mg dose of {Na,In,Tl,Br,I;
Figure 9 shows a spectral power distribution for a known 150W HPS lamp operated at 70W; and
Figure 10 shows a spectral power distribution for a 150W lamp of this invention operated at 70W.

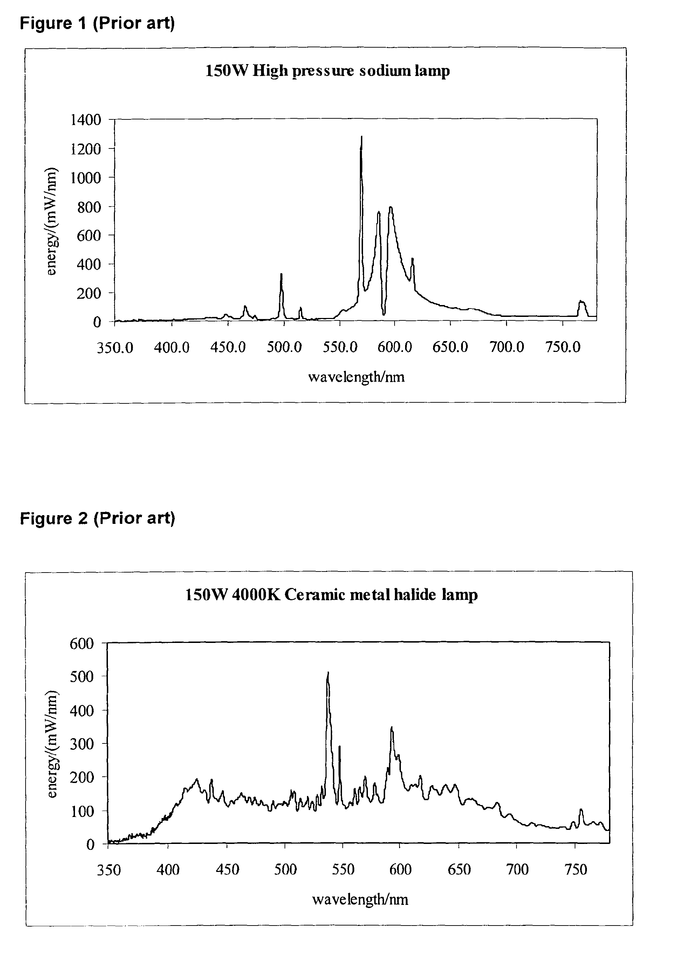

For comparison purposes, the spectral output characteristics of known lamps are shown in Figures 1 and 2, which show respectively the characteristics of a known high pressure sodium lamp and a metal halide discharge lamp with a ceramic arctube, each operated at its rated power of 150W.

As can be seen, the lamps of Figures 1 and 2 both have a peak output intensity at wavelengths in the vicinity of 550nm, thereby corresponding well with the sensitivity of the human eye under photopic (daylight) conditions.

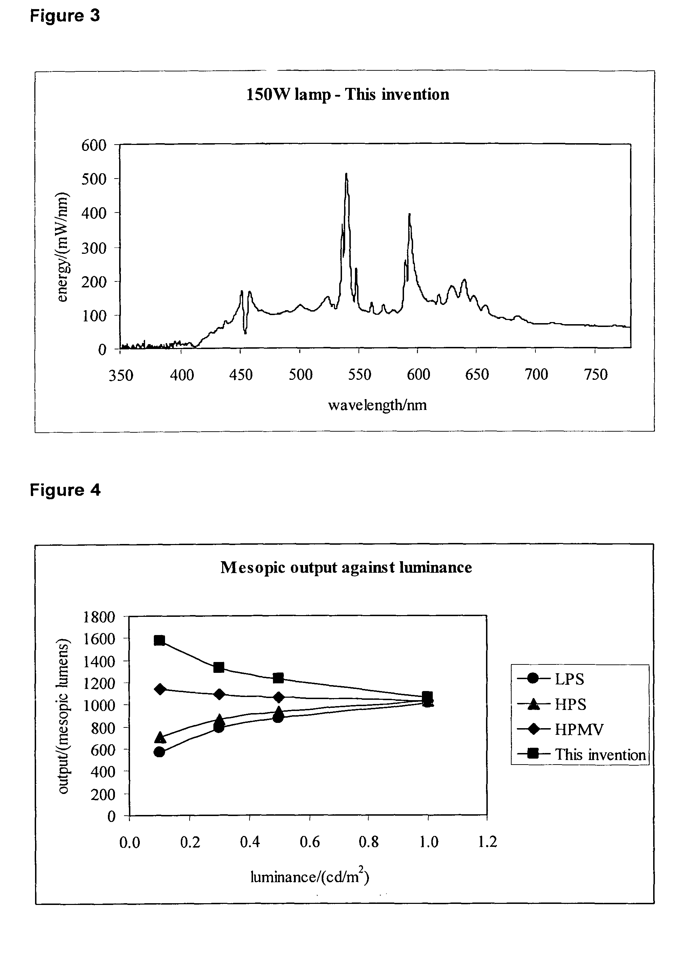

Figure 3 shows the spectral output characteristics of a metal halide discharge lamp in accordance with the invention, operated at its rated power of 150W. As can be seen by comparison with Figure 2, it is not significantly different from the characteristics of known metal halide discharge lamps when operated at its rated power, thereby also corresponding well with the human eye's sensitivity under photopic conditions.

The light sources of the invention have a spectral output selected to give good visual perception under photopic, mesopic, and preferably also scotopic lighting conditions. The characteristics of the spectral output and the dose chemistry ensure that the good visual perception is maintained when the light source is dimmed by operating at reduced power. In the embodiment described here, the former effect is achieved by a combination of dose elements Na + In + Tl + Ca with the basic dose elements Hg and Br and I. The latter effect is a consequence of having substantial amounts of In and Tl halides in the dose. Although the former effect could also be achieved with a dose containing rare-earth iodides, e.g. Na + Tl + Dy + Ho + Tm, this dose is unlikely to satisfy the latter effect because of the lower volatility of species that generate output in the range 400 to 550 nm.

In one embodiment of this invention, a set of ceramic metal halide lamps, 150W G12 type substantially of the kind described in EP-A-0,587,238, was made, but with a dose of {Na + In + Tl + Ca + Br + I}.

Three lamps with different proportions of dose constituents were made and tested, the mole fractions and weight fractions of the constituents being set out in Tables 1 and 2 respectively, and the lamp performance details (for 100 hour values) being summarised in Table 3.

**Table 1.**

| | Mole fractions | | | |
|---|---|---|---|---|
| Dose | Nal | Inl | TlBr | CaI₂ |
| 1 | 0.373 | 0.309 | 0.318 | 0.000 |
| 2 | 0.305 | 0.252 | 0.259 | 0.184 |
| 3 | 0.222 | 0.184 | 0.190 | 0.404 |

**Table 2.**

| | Weight fractions | | | |
|---|---|---|---|---|
| Dose | Nal | Inl | TlBr | CaI₂ |
| 1 | 0.253 | 0.338 | 0.409 | 0.000 |
| 2 | 0.195 | 0.260 | 0.315 | 0.230 |
| 3 | 0.133 | 0.178 | 0.215 | 0.474 |

**Table 3.**

| Summary of lamp performance for doses used in 150W ceramic metal halide experimental lamps. Values refer to 100 hours: | | | | | | | | | | | | |
|---|---|---|---|---|---|---|---|---|---|---|---|---|
| Dose | CaI2 weight/mg | voltage/V | current/A | power/W | form factor | output lumens | efficacy (lm/W) | CCx | CCy | CCT | CRI | R8 |
| 1 | 9 | 104 | 1.75 | 145.3 | 0.80 | 10633 | 73.2 | 0.368 | 0.392 | 4452 | 93 | 87 |
| 2 | 3 | 109 | 1.70 | 145.4 | 0.78 | 10995 | 75.6 | 0.381 | 0.408 | 4176 | 89 | 72 |
| 3 | 0 | 118 | 1.61 | 143.3 | 0.75 | 11068 | 77.2 | 0.383 | 0.412 | 4217 | 85 | 61 |

Figure 4 shows the effective mesopic output for a range of light sources, at varying luminance levels for fixed spectral power distribution normalised for equivalent photopic output. All the light sources currently used for roadway lighting, HPS, LPS and HPMV have poor performance when compared with the performance of the ceramic metal halide lamp described herein. At low lighting levels the performance of this latter lamp may be translated into energy savings by reducing roadway illumination, e.g. by reducing lamp power or by increasing the distances between fixtures.

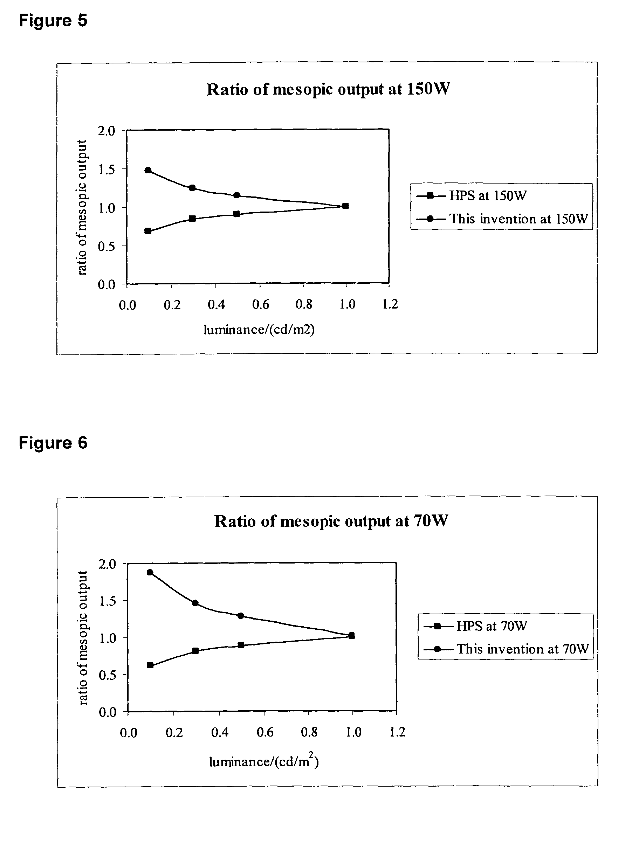

Figures 5 and 6 show the effective mesopic output at varying luminance levels for a sub set of these lamps with normalised photopic output and lamp power reduced from 150W to 70W. The relative spectral power distributions of these lamps change as a result of reducing the power input into the lamps.

It can now be seen that the performance of the lamp with the dose described herein significantly exceeds that of the HPS. This is a demonstration that light sources can be designed with a spectrum that performs as weii as, or better than, existing light sources under photopic conditions but whose spectrum is designed to alter in such a manner that this advantage is maintained or increased even as the power to the light source is reduced as an energy saving measure.

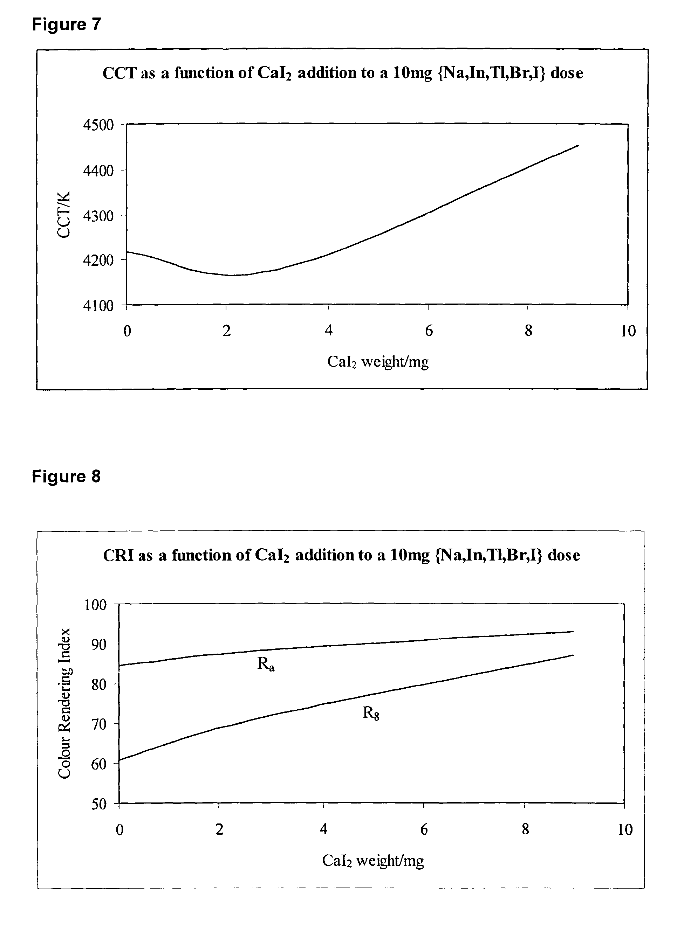

Figures 7 and 8 show key performance parameters, correlated colour temperature (CCT) and colour rendering index (CRI) as a function of CaI₂ additions to a 10mg dose of {Na,In,Tl,Br,I} with weight fractions {Na=0.039, In=0.161, Tl=0.294, Br=0.115, I=0.391} for a 150W lamp operated at rated power. These curves indicate the benefits of CaI₂ additions on the colour rendering indices while simultaneously moving the CCT in a direction favourable for mesopic lighting.

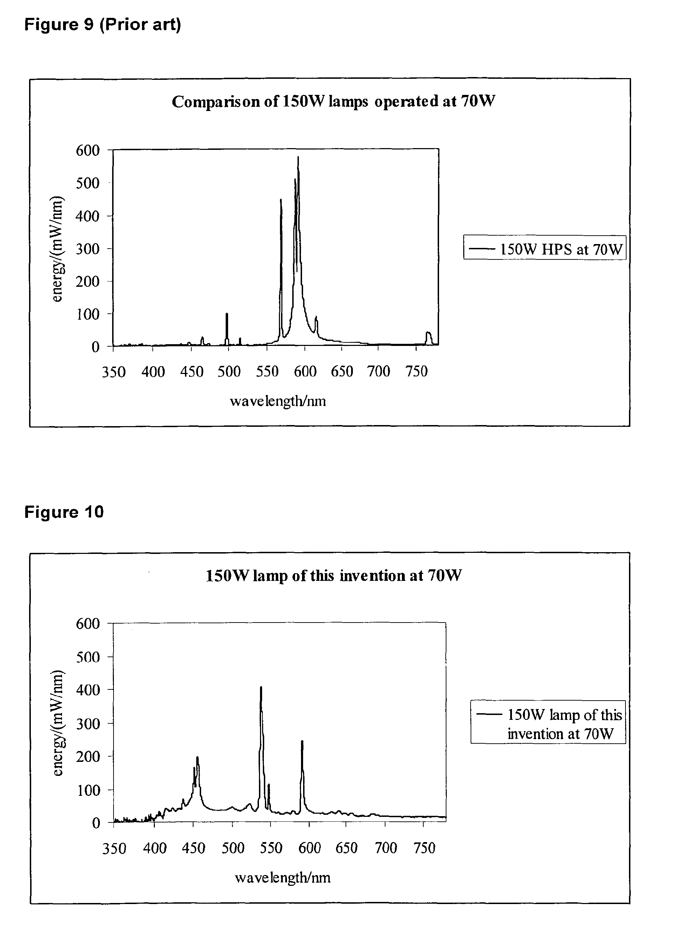

The spectral power distribution for a known 150W HPS lamp operated at 70W is shown in Figure 9. This may be compared with Figure 1, from which it can be seen that Figure 9 shows a high relative loss of radiation below 550nm which accounts for the performance shown in Figure 6.

The spectral power distribution for a 150W lamp of this invention operated at 70W is shown in Figure 10. This may be compared with Figure 3, from which it can be seen that in the case of Figure 10 the relative amount of radiation below 550nm is maintained at a comparatively high level in the reduced power case (compared with the HPS lamp again as illustrated in Figure 6).

In summary, the above-described embodiment of the present invention comprises a light source that has a spectrum designed to show increased maintenance of effective efficacy as illumination levels are reduced from the photopic through the mesopic to the scotopic regions when compared to currently available light sources which are optimised primarily for photopic conditions. This effect is enhanced as the lamp input power is reduced. This is especially valuable in situations where it is desirable to reduce power consumption while maintaining visibility without compromising the safety of humans, such as in roadway lighting.

An advantage of the use of the high-pressure discharge lamp of the above-described embodiment of the present invention is that as illumination levels are decreased by reducing the input power to the lamp, the spectral output shifts automatically in the desired direction. Other light sources can mimic this effect as the input power is reduced.

For instance, if the light source is a low pressure discharge lamp, the object of the invention could be fulfilled by using the lamp described in US-A-5,592,052 using suitable phosphor systems. The lamp described is a fluorescent lamp for which the coating has phosphors tuned to particular UV wavelengths corresponding to the mercury spectrum, the relative intensities of these emission lines being controlled by electrical parameters, such as a pulsed waveform, of the driving signal. These discharge emissions are converted by the phosphors to provide the required spectral changes.

Further, the light source may be an array of solid states devices, such as light emitting diodes (LEDs), comprising three different types each emitting at a different wavelength of radiation which when combined produce light optimised for photopic illumination. The shortest wavelength LED output may be maintained at a higher level while the output from the longer wavelength sources may be reduced in comparison when lowering the input powers.

The general principle described above can also be applied to arrays of low-pressure discharge light sources or arrays of incandescent light sources.

The spectral power distribution of a single incandescent lamp could be altered in a favorable manner by employing an electrochromic filter to selectively pass short wavelength radiation as the input power is reduced.

## Claims

1. A light source having a spectral distribution of emitted light which at a first operating power substantially corresponds with the sensitivity of the human eye under photopic conditions, **characterised in that** when operated at an operating power less than the first operating power, the spectral distribution of emitted light shifts to substantially correspond with the sensitivity of the human eye under mesopic or scotopic conditions.

2. A light source according to claim 1 wherein the shift of spectral distribution is caused by reducing the input power to the light source.

3. A light source according to claim 1 wherein the shift of spectral distribution is produced in conjunction with a reduction in the input power to the light source.

4. A light source according to claim 1 or claim 2 comprising a high pressure discharge lamp with a transparent or translucent envelope.

5. A light source according to claim 4 comprising a metal halide discharge lamp with a ceramic envelope.

6. A light source according to claim 5 wherein the lamp dose includes Hg, and the halogen comprises Br and/or I, with the metal component comprising Na, Ca, In and TI.

7. A light source according to claim 6 wherein the Hg is present in a quantity of 1.5X10⁻⁵ to 1.5X10⁻⁴ mol.cm⁻³ and the metal halide mixture is present in a quantity of 3.0X10⁻⁵ to 3.5X10⁻⁴ mol.cm⁻³.

8. A light source according to claim 7 wherein the weight ratios of the dose constituents fall within the following ranges:
Br/I; 0.00 - 0.25
Na/Ca; 0.25 - 3.00
In/Tl; 0.20 - 0.80
X/M; 1.10 - 2.50
Where X = (Br + I) and M = (Na + Ca + In + TI).

9. A light source according to claim 1 or claim 3 comprising a low pressure discharge lamp with a transparent or translucent envelope.

10. A light source according to claim 1 or claim 3 comprising a solid-state light source array with different light sources in the array have different emission spectra, and means for selectively operating individual sources in the array so as to produce said shift in spectral distribution when the array is operated at said lesser operating power.

11. A light source according to claim 1 or claim 3 comprising an incandescent lamp, optical filter means, and means for operating the filter means to produce said shift in spectral distribution when the lamp is operated at said lesser operating power.
